# EUROPEAN PATENT APPLICATION

(11) **EP 1 793 340 A1**
(43) Date of publication of application: **06.06.2007**
(21) Application number: 06024198.1
(22) Date of filing: 22.11.2006
(51) Int. Cl.: G06Q 30/00, G06F 21/00

(54) **A method and system for providing system security services**

(30) Priority: 22.11.2005 US 285501
(71) Applicant: Lionic Corporation, 7F, No. 178, Sec. 2 Gongdaowu Rd. Hsin chu City (TW)
(72) Inventor: Lu, Ping-Piao, Hsinchu City (TW); Zhao, Shi-Ming, Taipei City (TW); Wang, Yao-Tzung, Jhubei City Hsinchu County (TW)
(74) Representative: Weber, Joachim

(57) **Abstract**

A method and system for providing system security services is disclosed. The server of a vendor of a content inspection engine receives a current set of definition data in a first format from the server of a definition data file generator through a network. The vendor and the definition data file generator are two unaffiliated legal entities. Then the server of the content inspection engine vendor makes available the definition data to be used by a network device via the network. The network device utilizes the content inspection engine and the definition data in a second format that the content inspection engine recognizes in its unmodified state to provide system security services to a number of devices that are attached to the network device.

## Description

### FIELD

This document generally relates to system security technologies, especially methods and systems for providing system security services.

### BACKGROUND

Unless otherwise indicated herein, the methods and systems described in this section are not prior art to the claims in this application and are not admitted to be prior art by inclusion in this section.

As computer networks become ubiquitous, any device that is connected to the networks is susceptible to debilitating virus attacks. Anti-virus solutions are commonly used to counter these attacks. The existing solutions generally assemble the received packets into a file before determining whether the file includes certain predetermined virus definitions. In other words, no inspection is performed until after a file or a block of data has been assembled.

In an all-software implementation of an anti-virus solution, the solution includes software programs that run on the general purpose processors of server systems or client systems. To remain effective in combating the latest strains and classes of the viruses, the vendors of the software programs would encourage the licensees of their programs to upgrade both of the programs and the related definition data files, such as the virus definitions, on the server systems or client systems to the latest versions. The vendors generally receive fees for providing copies of the software programs, the technical support relating to the programs, and the upgrades of the programs and even the definition data files.

In a hardware implementation of an anti-virus solution, the solution includes specialized inspection hardware that compares the aforementioned assembled files and data blocks with the definition data files. The vendors of the hardware solutions typically receive compensation for selling the hardware and providing the related technical support. Although these vendors generally specialize in the design and implementation of efficient computation systems, many of them today also choose to assume the responsibility of detecting and analyzing the new viruses and updating the definition data files accordingly.

### BRIEF DESCRIPTION OF THE DRAWINGS

FIG. 1 is a block diagram of one multi-party embodiment of the method and system for providing system security services;

FIG. 2 is a block diagram of another multi-party embodiment of the method and system for providing system security services;

FIG. 3 is a flow chart of one process that a content inspection engine vendor follows;

FIG. 4A illustrates one revenue sharing model among a definition data file generator, a content inspection engine vendor, and a network device vendor;

FIG. 4B illustrates another revenue sharing model among a definition data file generator, a content inspection engine vendor, and a network device vendor;

FIG. 4C illustrates yet another revenue sharing model among a definition data file generator, a content inspection engine vendor, and a network device vendor;

FIG. 5 is a flow chart of one process that a content inspection engine vendor follows to escalate the handling of various technical support requests;

FIG. 6 is a block diagram of a server system upon which an embodiment of the method and system for providing system security services may be implemented.

### DETAILED DESCRIPTION

A method and system for providing system security services are described. In the following description, for the purposes of explanation, numerous specific details are set forth to provide a thorough understanding of this method and system. It will be apparent, however, to one skilled in the art that the method and system may be practiced without these specific details.

### 1.0 GENERAL OVERVIEW

The method and system as discussed below involve a number of parties, namely a vendor of a content inspection engine, a definition data file generator, and a vendor of a network device. The server of the content inspection engine vendor receives a current set of definition data in a first format from the server of the definition data file generator through a network. The vendor and the definition data file generator are two unaffiliated legal entities. Then the server of the content inspection engine vendor makes available the definition data to be used by a network device via the network. The network device utilizes the content inspection engine and the definition data in a second format that the content inspection engine recognizes in its unmodified state to provide system security services to a number of devices that are attached to the network device.

### 2.0 ONE MULTI-PARTY IMPLEMENTATION

### 2.1 SYSTEM OVERVIEW

One multi-party embodiment of a method and system for providing system security services is described. Throughout this document, a "system" can be a standalone device, an organization consisting of a group of devices, or a group of devices that collectively perform a set of functions. To "secure" a system involves examining the data units that enter into and depart from the system and guarding against the invasion of the known unwanted codes and unauthorized accesses. Some examples of system security services include, without limitation, keeping a current list of the known unwanted codes (otherwise referred to as the definition data file), delivering the definition data file to the devices that examine the data units, carrying out the examination discussed above, providing various levels of technical support, and calculating, accounting for, and distributing the fees paid for by the subscribers to the services.

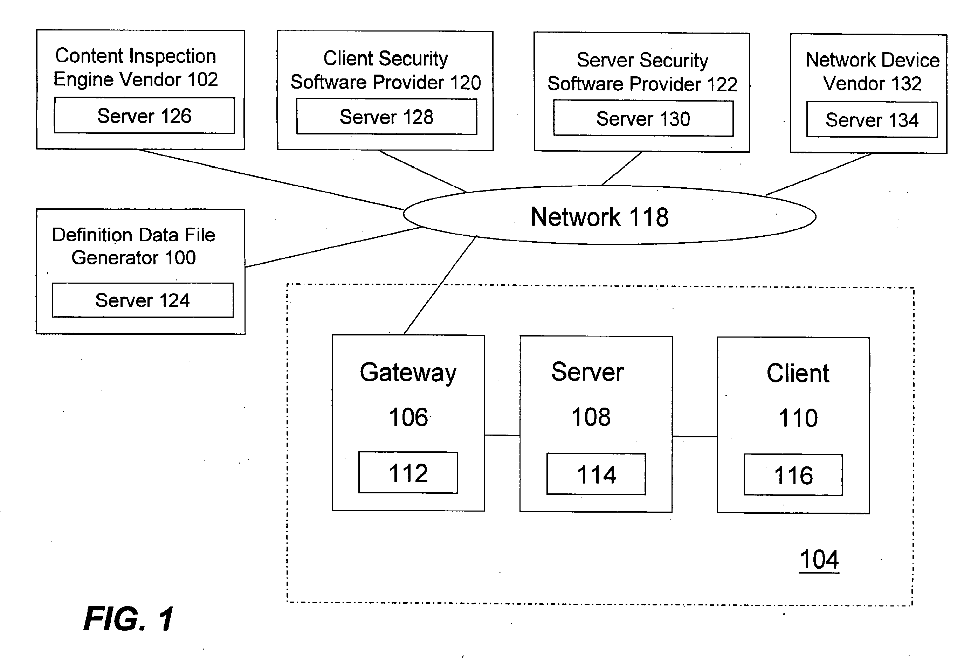

FIG. 1 illustrates one multi-party embodiment, in which the parties involved include definition data file generator 100, content inspection engine vendor 102, system 104, client security software provider 120, server security software provider 122, and network device vendor 132. These distinct parties communicate with one another via network 118. System 104 includes a network device, such as gateway 106, which is provided by network device vendor 132, a number of servers, such as server 108, and a number of clients, such as client 110. Alternatively, a network device, as opposed to the separate gateway 106 and server 108 shown in FIG. 1, comprises the functionality of both gateway 106 and server 108.

Gateway 106 of system 104 utilizes content inspection engine 112 from content inspection engine vendor 102 to examine the contents of the packets as they enter and immediately prior to their departing gateway 106; server 108 uses server security software 114 from server security software provider 122 to prevent intrusions to the server; client 110 uses client security software 116 from client security software provider 120 to prevent intrusions to the client. Some examples of the client include, without limitation, a desktop computer, a laptop computer, a tablet personal computer, a pocket personal computer, a cellular phone, a smart phone, a personal digital assistant, and any mobile device or computing device with connectivity capabilities.

In one embodiment, each of the parties, namely, definition data file generator 100, content inspection engine vendor 102, client security software provider 120, server security software provider 122, and network device vendor 132 has access to at least one server that is connected to network 118, such as servers 124, 126, 128, 130, and 134, respectively. The functionality of these servers will be further described in the subsequent sections.

In one implementation, each of content inspection engine 112, server security software 114, and client security software 116 refers to its own definition data file. The definition data files are stored in erasable and re-programmable memory, such as, without limitation, flash memory. Alternatively, the definition data files for the server security software 114 and client security software 116 are stored in the storage devices that are either directly or indirectly attached to server 108 and client 110, respectively.

Moreover, definition data file generator 100 and content inspection engine vendor 102 are two distinct and legally unaffiliated entities. In this document, an "affiliated" or "legally affiliated" entity of a company refers to, without limitation, a group, a department, a division, and a subsidiary of the company. In addition, if an entity directly or indirectly owns a certain percentage of a company, the entity is "affiliated" or "legally affiliated" to the company.

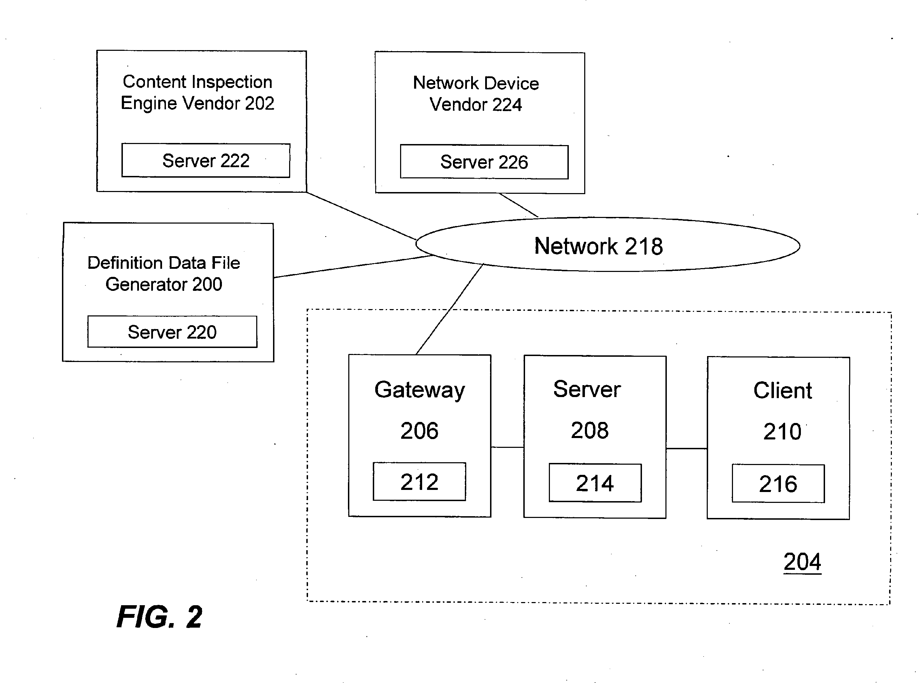

FIG. 2 illustrates one variation of the embodiment shown in FIG. 1. Specifically, definition data file generator 200 also provides server security software 214 and client security software 216. Thus, definition data file generator 200 does not only generate the file with the current definitions of the known threats and unwanted codes, but it also provides the security software and the subsequent upgrades for server 208 and client 210.

In another variation of the multi-party embodiment shown in FIG. 1, network device vendor 224 also provides server security software 214 and client security software 216. Thus, network device vendor 224 does not only focus on the design and implementation of the gateway, but it also develops and provides the server and client security software and the subsequent upgrades.

### 2.1 DELIVERY OF THE DEFINITION DATA FILE

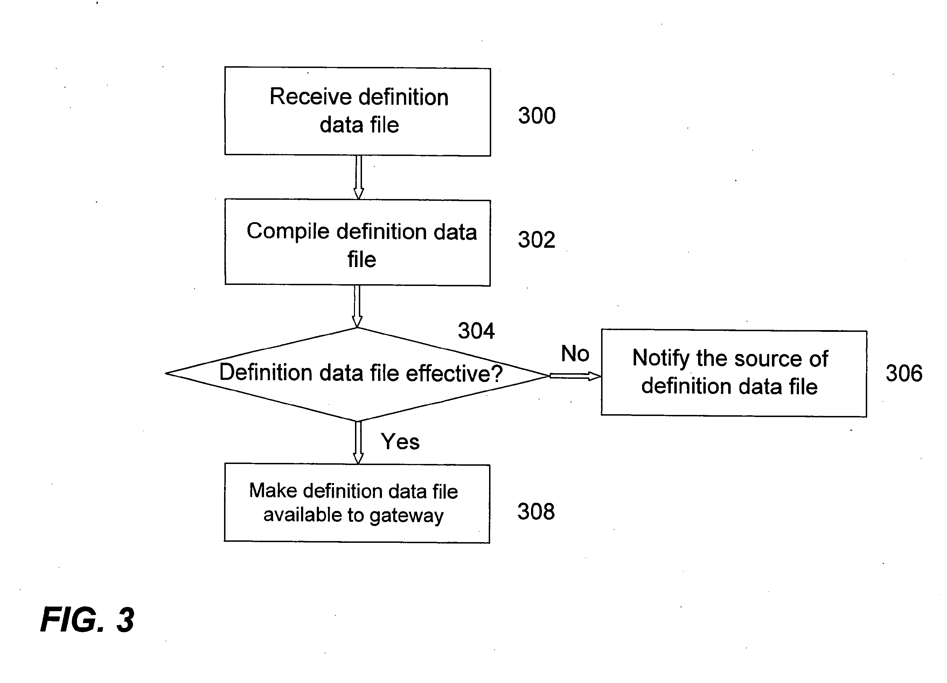

FIG. 3 is a flow chart of one process that a content inspection engine vendor follows. As an illustration, in block 300, server 126 of content inspection engine vendor 102 as shown in FIG. 1 receives the definition data file from server 124 of definition data file generator 100. In one implementation, server 124 delivers the data file to server 126 as soon as a new version of the file becomes available and without having to receive any request from server 126. Alternatively, the delivery of the definition data file takes place after server 126 requests for it. Some of the other tasks performed by server 124 include, without limitation, detecting and analyzing new and unknown threats to any of the devices connected to network 118 and generating, maintaining, and distributing the definition data file that reflects the results of the detection and analyses.

In one embodiment, the format of the definition data file is in human-readable expressions, such as regular expressions. "Human-readable"'expressions refer to data shown in a format easily read by most humans, such as, without limitation, American Standard Code for Information Interchange ("ASCII") encoded text. A regular expression, a well known computer science concept, refers to a string that is put together according to certain syntax rules, where the string represents a set of different combinations of strings. Alternatively, the definition data file contains a combination of human-readable expressions and machine-readable data. "Machine-readable" data refer to data primarily designed for reading by machines, such as, without limitation, binary data.

In block 302, one embodiment of server 126 compiles the just received definition data file into data that content inspection engine 112 recognizes and can operate on. Specifically, the compiled data are in a format that content inspection engine 112 can operate on without any additional format conversions.

In block 304, one embodiment of server 126 verifies the effectiveness of the compiled definition data file using a number of test patterns it maintains. For example, in one implementation, the known test patterns are the patterns of known viruses. One embodiment of server 126 uses the definition data file to try to detect the test patterns. If server 126 does not accurately detect the test patterns, then server 126 deems the definition data file to be ineffective and notifies the source of the file, such as server 124, in block 306.

On the other hand, if server 126 correctly detects the test patterns using the definition data file, then in block 308, server 126 makes the definition data file available for gateway 106. In one implementation, server 126 delivers the definition data file to the entity that controls the configuration and maintenance of gateway 106, such as the network administrator or network device vendor 132 via network 118. One embodiment of server 134 aggregates the definition data file with the other definition data from sources other than server 126. After the aggregation, server 134 compiles the aggregated data and stores the compiled data in the erasable and reprogrammable memory, such as flash memory, of gateway 106 with or without human intervention. In an alternative implementation, server 126 compiles the definition data file, delivers the compiled data to gateway 106 via network 118, and stores the data in the memory of gateway 106, with or without any human intervention. It is worth emphasizing that the aforementioned compiled data, either generated by server 134 or server 126, are in a format that content inspection engine 112 of gateway 106 can operate on without any format conversions or modifications.

Another embodiment of server 126 makes available different versions of the definition data file. For example, the definition data file for gateway 106, or gateway definition data file, may contain a subset of the data that are in the definition data file, which server 126 determines to be effective in block 304.

Content inspection engine vendor 202 shown in FIG. 2 follows the same process of making the definition data file available to gateway 206 of system 204 as discussed above. In the event definition data file generator 200 also provides server security software 214 and client security software 216, definition data file generator 200 becomes the source of the definition data file for gateway 206, server 208, and client 210. In one implementation, server 222 of content inspection engine vendor 202 receives the definition data file from definition data file generator 200 and generates different versions of the file. The version for gateway 206 contains a subset of the data in the file, the version for server 208 contains another subset, and the version for client 210 contains yet another subset.

In some instances, network device vendor 132 requires server 126 to provide the difference between the current version of the definition data file and the previous version. In one implementation, server 126 determines the difference. Alternatively, server 124 determines and sends the difference to server 126. In this scenario, to ensure the accuracy of the data from server 124, server 126 still independently determines the difference between the current and previous versions to compare with the results from server 124.

Moreover, in one implementation, server 126 modifies the initial formats of the definition data file and the difference between the current and previous versions prior to delivering the data to server 134 via network 118. For example, one embodiment of server 126 encrypts, compresses, encrypts and compresses, compresses and encrypts, or compiles the definition data file and the difference before delivering the data. However, in an alternative embodiment, server 126 delivers the file and the difference in their initial formats. The discussions regarding possible difference calculations and format modifications for server 126 above also apply to server 222 shown in FIG. 2.

### 2.2 REVENUE SHARING MODELS

The hardware solution providers, such as the content inspection engine vendor and the network device vendor, generally derive revenue from the sales of the hardware. On the other hand, the software providers, such as the client and server security software providers, derive revenue from the combination of the licensing of the software and the subscription to the related services. In the event definition data file generator 200 supplies both server security software 214 and client security software 216, one embodiment of definition data file generator 200 receives the entire licensing and subscription revenue from system 204 and distributes one portion of that revenue to content inspection engine vendor 202 and another portion to network device vendor 206.

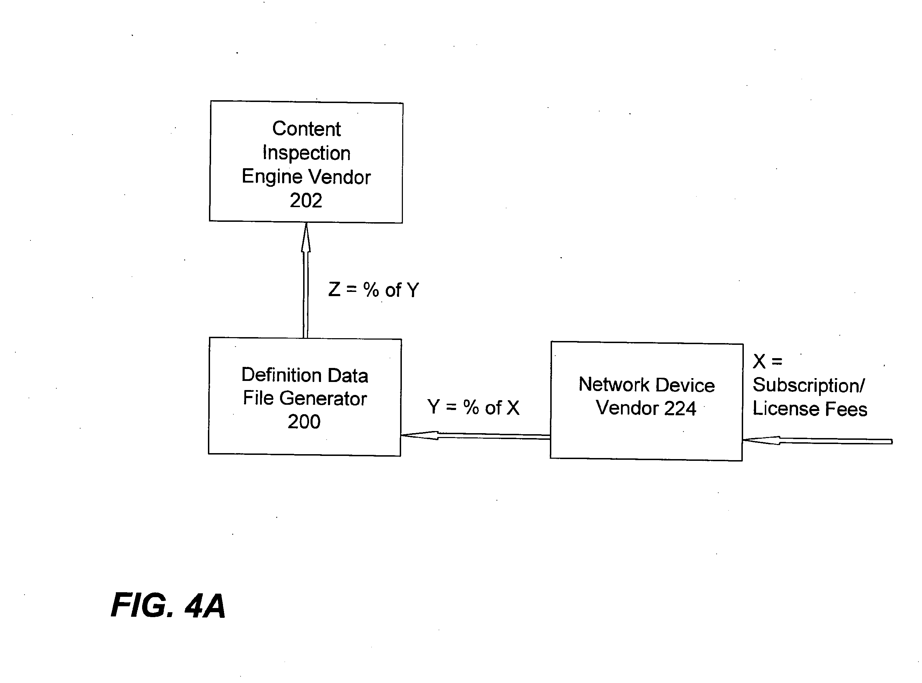

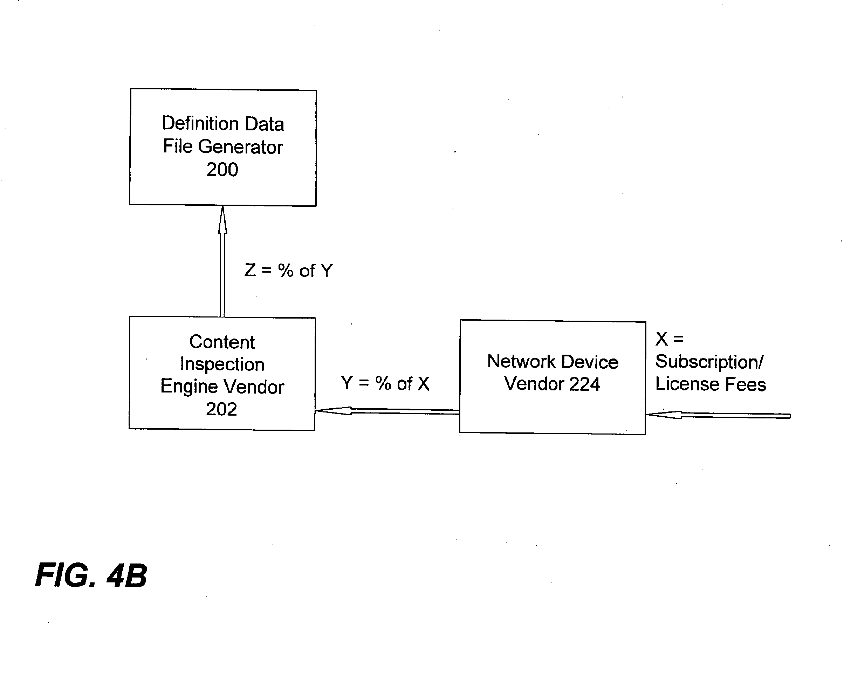

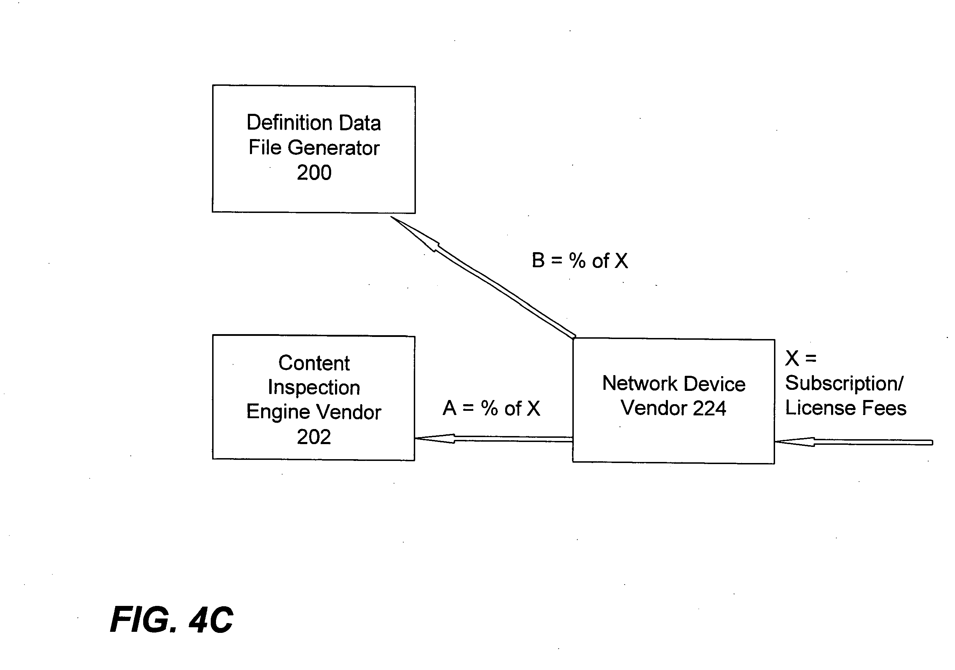

As discussed in the prior sections, in one embodiment shown in FIG. 2, network device vendor 224 also provides the client and server security software. For the licensing and subscription fee portion of the revenue, FIG. 4A, 4B, and 4C illustrate some of the possible revenue sharing models among definition data file generator 200, content inspection engine vendor 202, and network device vendor 224.

FIG. 4A illustrates one revenue sharing model, where network device vendor 224 gives a percentage of the licensing and subscription fees that it has received, or Y as shown in the drawing, to definition data file generator 200. Definition data file generator 200 then keeps some of the fees and gives the remaining amount, or Z as shown in the drawing, to content inspection engine vendor 202. FIG. 4B illustrates a slightly different model, where content inspection engine vendor 202 receives Y, and definition data file generator 200 receives Z.

FIG. 4C illustrates yet another revenue sharing model, where network device vendor 224 distributes certain percentages of the received licensing and subscription fees to content inspection engine vendor 202 and definition data file generator 200 in parallel, or A and B as shown in the drawing, respectively. In one implementation, the servers of the parties involved in the discussed models above are programmed to automatically perform tasks such as, without limitation, accounting for and classifying the fees received, applying the negotiated percentages to the licensing and subscription fees, notifying one another of the status of the fee distribution, and initiating wire transfers.

### 2.3 TECHNICAL SUPPORT MODELS

In one embodiment, the party providing the security software is the main technical support contact window for the subscribers of the system security services. The subsequent discussions refer to the aforementioned example of network device vendor 224 that provides client and server security software and consider network device vendor 224 as the contact window to process technical support requests.

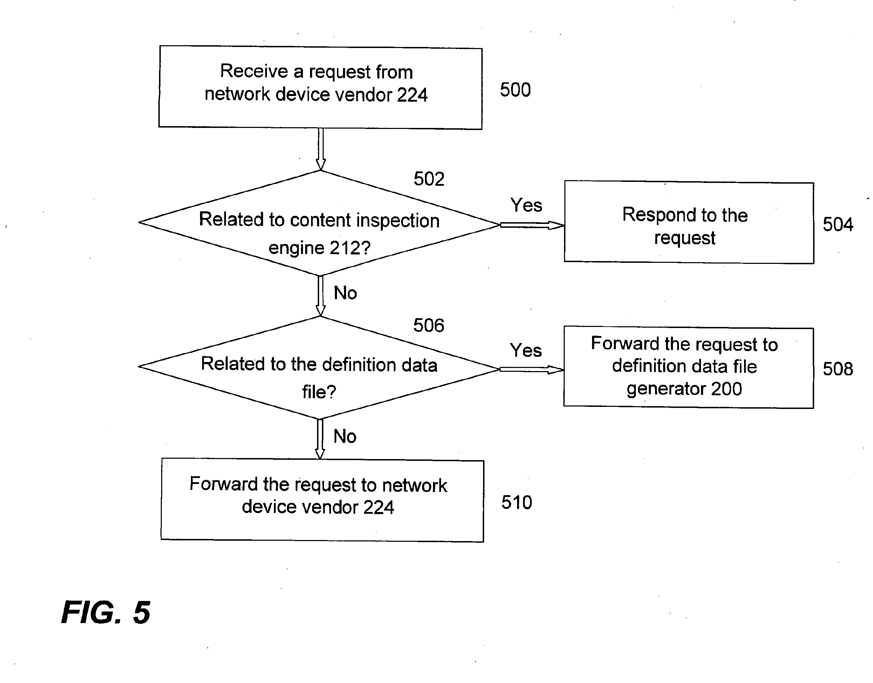

FIG. 5 is a flow chart of one process that content inspection engine vendor 202 follows to escalate the handling of various technical support requests. In block 500, server 222 of content inspection engine vendor 202 receives a request for technical support from server 226 of network device vendor 224. In one implementation, server 226 forwards the request to server 222 if it is unrelated to the defects or bugs of the server and client security software 214 and 216. Alternatively, server 226 forwards the request to server 222 regardless of the nature of the request, but server 222 sends the request back to server 226 if the request is about issues with server and client security software 214 and 216.

In block 502, server 222 determines whether the request is related to the defects or bugs of content inspection engine 212 and proceeds to respond to the request in block 504 if the relationship is established. Server 222 may provide fixes or workarounds for the reported defects or bugs to server 226 for it to relay to the requesting party or notify appropriate personnel of content inspection engine vendor 202 to work with network device vendor 224 to assist the requesting party. However, if the request is unrelated to content inspection engine 212, then server 222 checks if the request is related to issues with the definition data file, such as, without limitation, omissions of certain definitions or errors in some definitions, in block 506. If the request indeed deals with issues relating to the definition data file, server 222 forwards the request to server 220 of definition data file generator 200 in block 508. In one implementation, definition data file generator 200 is responsible for responding to such a definition data file related request. Otherwise, server 222 forwards the request back to server 226 for another review in block 510. In one implementation, network device vendor 224 not only reviews the request but becomes responsible for handling the request.

### 3.0 EXAMPLE System Structure

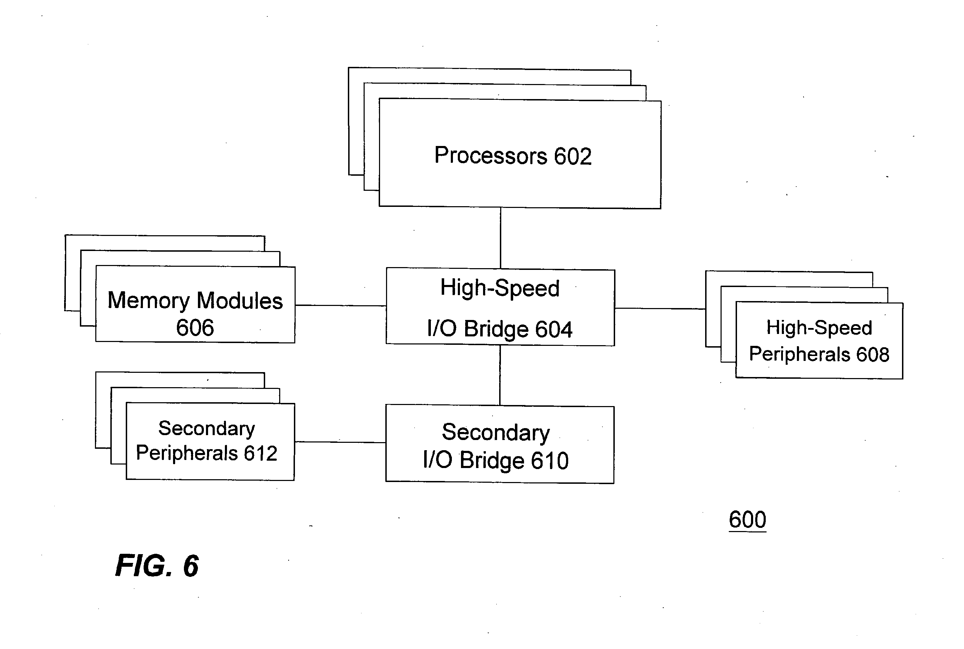

FIG. 6 is a block diagram that illustrates any one of the servers shown in FIG. 1 and FIG. 2 upon which an embodiment of the method and system for providing system security services may be implemented. Server system 600 includes a number of processors, such as processor 602, that access memory modules 606 via high speed I/O bridge 604. High speed I/O bridge 604 also manages the connections from processor 602 to on-chip memory modules, such as caches, and a dedicated graphics processing channel, such as the Accelerated Graphics Port. Memory modules 606 stores information and instructions to be executed by processor 602 and may store temporary variables or other intermediate information during the execution of the instructions.

High speed I/O bridge 604 manages the data-intensive pathways and supports high speed peripherals, such as, without limitation, display, gigabit Ethernet, fiber channel, and Redundant Array of Independent Disks ("RAID"). High speed I/O bridge 604 is also coupled with secondary I/O bridge 610, which supports secondary peripherals 612, such as, without limitation, disk controllers, Universal Serial Bus ("USB"), audio, serial, system Basic Input/Output System ("BIOS"), the Industry Standard Architecture ("ISA") bus, the interrupt controller, and the Intelligent Driver Electronics ("IDE") channels.

According to one embodiment of the method and system for providing system security services, the services are provided by a number of server systems, such as server system 600, in response to processor 602 executing one or more sequences of one or more instructions contained in memory modules 606. Such instructions may be read into main memory modules 606 from another computer-readable medium, such as a storage device via secondary I/O bridge 610. Execution of the sequences of instructions contained in memory modules 606 causes processor 602 to perform the process steps described herein. In alternative embodiments, hard-wired circuitry may be used in place of or in combination with software instructions to implement the method and system.

The term "computer-readable medium" as used herein refers to any medium that participates in providing instructions to processor 602 for execution. Such a medium may take many forms, including but not limited to, non-volatile media, volatile media, and transmission media. Non-volatile media includes, for example, optical or magnetic disks. Volatile media includes dynamic memory. Transmission media includes coaxial cables, copper wire and fiber optics. Transmission media can also take the form of acoustic, light, or carrier waves.

Various forms of computer readable media may be involved in carrying one or more sequences of one or more instructions to processor 602 for execution. For example, the instructions may initially be carried on a magnetic disk of a remote system. The remote system can load the instructions into its dynamic memory and send the instructions to server system 600. The instructions received by memory modules 606 may optionally be stored in a storage device coupled to secondary I/O bridge 610 either before or after execution by processor 602.

### 4.0 EXTENSIONS AND ALTERNATIVES

In the foregoing specification, the method and system for providing system security services have been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

## Claims

1. A method, comprising:
receiving a current set of definition data in a first format from a first server of a definition data file generator by a second server of a vendor of a content inspection engine via a network, wherein said vendor and said definition data file generator are two unaffiliated legal entities; and
making available said current set of said definition data to be used by a network device by said second server via said network, wherein said network device utilizes said content inspection engine and said current set of said definition data in a second format that said content inspection engine recognizes in its unmodified state to provide a plurality of system security services to a plurality of devices that are attached to said network device.

2. The method as recited in claim 1, further comprising said vendor of said content inspection engine receiving a portion of the licensing revenue for said plurality of said system security services received by a vendor of said network device from said vendor of said network device.

3. The method as recited in claim 1, further comprising said vendor of said content inspection engine receiving a portion of the licensing revenue for said plurality of said system security services received by said definition data file generator from said definition data file generator.

4. The method as recited in claim 2, further comprising:
receiving a request for technical support from a third server of said vendor of said network device by said second server; and
forwarding said request to other servers on said network by said second server if said request is unrelated to the issues of said content inspection engine.

5. The method as recited in claim 1, further comprising:
identifying a difference between said current set of said definition data and a previous set of said definition data by said second server; and
making available said difference to be used by said network device via said network by said second server.

6. The method as recited in claim 1, further comprising:
verifying whether said current set of said definition data correctly detect a plurality of test patterns by said second server prior to making available said current set of said definition data to be used by said network device.

7. The method as recited in claim 1, further comprising:
modifying the initial formats of said current set of said definition data prior to making available said current set of said definition data to be used by said network device.

8. The method as recited in claim 1, further comprising:
making available a subset of said current set of said definition data to be used by said network device.

9. A computer-readable medium containing one or more sequences of instructions for providing system security services, which instructions, when executed by one or more processors of a first server of a vendor of a content inspection engine, cause the one or more processors to:
receive a current set of definition data in a first format from a second server of a definition data file generator via a network, wherein said vendor and said definition data file generator are two unaffiliated legal entities; and
make available said current set of said definition data to be used by a network device via said network, wherein said network device utilizes said content inspection engine and said current set of said definition data in a second format that said content inspection engine recognizes in its unmodified state to provide a plurality of system security services to a plurality of devices that are attached to said network device.

10. The computer-readable medium as recited in claim 9, further comprising instructions which, when executed by the one or more processors of said first server, cause the one or more processors to handle a portion of the licensing revenue for said plurality of said system security services received by a vendor of said network device from said vendor of said network device.

11. The computer-readable medium as recited in claim 9, further comprising instructions which, when executed by the one or more processors of said first server, cause the one or more processors to handle a portion of the licensing revenue for said plurality of said system security services received by said definition data file generator from said definition data file generator.

12. The computer-readable medium as recited in claim 10, further comprising instructions which, when executed by the one or more processors of said first server, cause the one or more processors to:
forward a request for technical support from a third server of said vendor of said network device to other servers on said network if said request is unrelated to the issues of said content inspection engine.

13. The computer-readable medium as recited in claim 9, further comprising instructions which, when executed by the one or more processors of said first server, cause the one or more processors to:
identify a difference between said current set of said definition data and a previous set of said definition data; and
make available said difference to be used by said network device via said network.

14. The computer-readable medium as recited in claim 9, further comprising instructions which, when executed by the one or more processors of said first server, cause the one or more processors to:
verify whether said current set of said definition data correctly detect a plurality of test patterns prior to making available said current set of said definition data to be used by said network device.

15. The computer-readable medium as recited in claim 9, further comprising instructions which, when executed by the one or more processors of said first server, cause the one or more processors to:
modify the initial formats of said current set of said definition data prior to making available said current set of said definition data to be used by said network device.

16. The computer-readable medium as recited in claim 9, further comprising instructions which, when executed by the one or more processors of said first server, cause the one or more processors to:
make available a subset of said current set of said definition data to be used by said network device.

17. A first server of a vendor of a content inspection engine, attached to a network, comprising:
means for receiving a current set of definition data in a first format from a second server of a definition data file generator via said network, wherein said vendor and said definition data file generator are two unaffiliated legal entities; and
means for making available said current set of said definition data to be used by a network device via said network, wherein said network device utilizes said content inspection engine and said current set of said definition data in a second format that said content inspection engine recognizes in its unmodified state to provide a plurality of system security services to a plurality of devices that are attached to said network device.

18. The first server as recited in claim 17, further comprising means for handling a portion of the licensing revenue for said plurality of said system security services received by a vendor of said network device from said vendor of said network device.

19. The first server as recited in claim 17, further comprising means for handling a portion of the licensing revenue for said plurality of said system security services received by said definition data file generator from said definition data file generator.

20. The first server as recited in claim 18, further comprising:
means for receiving a request for technical support from a third server of said vendor of said network device; and
means for forwarding said request to other servers on said network if said request is unrelated to the issues of said content inspection engine.

21. The first server as recited in claim 17, further comprising:
means for identifying a difference between said current set of said definition data and a previous set of said definition data; and
means for making available said difference to be used by said network device via said network.

22. The first server as recited in claim 17, further comprising:
means for verifying whether said current set of said definition data correctly detect a plurality of test patterns prior to making available said current set of said definition data to be used by said network device.

23. The first server as recited in claim 17, further comprising:
means for modifying the initial formats of said current set of said definition data prior to making available said current set of said definition data to be used by said network device.

24. The first server as recited in claim 17, further comprising:
means for making available a subset of said current set of said definition data to be used by said network device.

25. A first server of a vendor of a content inspection engine, attached to a network, comprising:
a processor,
a high speed input/output bridge, coupled to said processor,
a memory, coupled to said high speed input/output bridge, wherein said memory contains instructions when executed by said processor, causes said processor to:
receive a current set of definition data in a first format from a second server of a definition data file generator via said network, wherein said vendor and said definition data file generator are two unaffiliated legal entities; and
make available said current set of said definition data to be used by a network device via said network, wherein said network device utilizes said content inspection engine and said current set of said definition data in a second format that said content inspection engine recognizes in its unmodified state to provide a plurality of system security services to a plurality of devices that are attached to said network device.

26. The first server as recited in claim 25, wherein said memory further comprising instructions which, when executed by the one or more processors of said first server, cause the one or more processors to handle a portion of the licensing revenue for said plurality of said system security services by a vendor of said network device from said vendor of said network device.

27. The first server as recited in claim 25, wherein said memory further comprising instructions which, when executed by the one or more processors of said first server, cause the one or more processors to handle a portion of the licensing revenue for said plurality of said system security services received by said definition data file generator from said definition data file generator.

28. The first server as recited in claim 26, wherein said memory further comprising instructions which, when executed by the one or more processors of said first server, cause the one or more processors to:
receive a request for technical support from a third server of said vendor of said network device; and
forward said request to other servers on said network if said request is unrelated to the issues of said content inspection engine.

29. The first server as recited in claim 25, wherein said memory further comprising instructions which, when executed by the one or more processors of said first server, cause the one or more processors to:
identify a difference between said current set of said definition data and a previous set of said definition data; and
make available said difference to be used by said network device via said network.

30. The first server as recited in claim 25, wherein said memory further comprising instructions which, when executed by the one or more processors of said first server, cause the one or more processors to:
verify whether said current set of said definition data correctly detect a plurality of test patterns prior to making available said current set of said definition data to be used by said network device.

31. The first server as recited in claim 25, wherein said memory further comprising instructions which, when executed by the one or more processors of said first server, cause the one or more processors to:
modify the initial formats of said current set of said definition data prior to making available said current set of said definition data to be used by said network device.

32. The first server as recited in claim 25, wherein said memory further comprising instructions which, when executed by the one or more processors of said first server, cause the one or more processors to:
make available a subset of said current set of said definition data to be used by said network device.
